# EUROPEAN PATENT APPLICATION

(11) **EP 1 415 541 A2**
(43) Date of publication of application: **06.05.2004**
(21) Application number: 03256273.8
(22) Date of filing: 03.10.2003
(51) Int. Cl.: A23G 3/00, A23P 1/08, A23G 9/02

(54) **Food item, method and kit for preparing the same**

(30) Priority: 04.10.2002 GB 0223004
(71) Applicant: Loseley Dairy Ice Cream Ltd, Rumney, Cardiff CF3 2ED (GB)
(72) Inventor: Wilson, Timothy J.R., Rumney, Cardiff CF3 2ED (GB)
(74) Representative: Wood, Graham

(57) **Abstract**

The invention relates to a packaged item of food, a kit for forming said item of food and a method for forming said item. The item of food comprises a series of articles of foodstuffs, at least one of which is a frozen confection, with the articles placed together in a predefined format once removed from the package in which the same are provided. By using the predefined format each item of food can be prepared in the same condition each time, even by unskilled personnel, or persons from performed articles of foodstuff.

## Description

The invention to which this application relates is to an improved and inventive form of food item, said food item comprising a combination of at least two foodstuffs arranged in a manner so as to provide an improved assembled product for a consumer such as for example a wholesale outlet where the foodstuffs can be arranged, for example, by a chef in a restaurant, to form the assembled food item as, for example, a dessert for selection and consumption by customers of the restaurant. All the foodstuffs required for the food item can be provided as part of one package so there is no risk of the user running out of components for any particular food item that they are assembling. As a result of the invention improved presentation of the foodstuff is achieved.

The invention is particularly related to the provision of ice cream foodstuffs in an inventive manner in combination with other foodstuffs, such as, for example, bakery foodstuffs such as products known as waffles, so that the same, in combination, can be used to provide a food item which can be easily consumed by the consumer and is also attractive and appealing.

Commonly, ice cream products can include flavourings, sauces and/or other material spaced throughout the ice cream product when held in a container. The combination of foodstuffs in the ice cream, can provide particular flavours and textures to the ice cream when eaten. Portions of ice cream can also be enrobed in chocolate, for example, and consumed. It is possible for the user to take a portion of ice cream from an ice cream container put the same in a bowl and place other foodstuffs into the bowl however the foodstuffs tend not to be visually appealing as they are simply portions taken from a larger portion of the foodstuff, and also, the manufacturers of the foodstuff have no control or particular commercial benefit from the combination of foodstuffs.

The aim of the present invention is to provide a food item, said item of food assembled and formed by a food preparer, such as a chef using a number of different foodstuffs, with the foodstuffs presented as a package, and wherein one of the foodstuffs is a frozen confection such as ice cream or sorbet.

In a first aspect of the invention there is provided a packaged food item, said item of food including at least two different foodstuff articles, at least one of the foodstuff articles being a frozen confection and characterised in that the foodstuff articles are shaped so as to be substantially linked geometrically and said foodstuff articles placed together in mutual relationship to form the item of food when the package is opened and the articles removed.

In one embodiment a plurality of said foodstuff articles are pre-packed and placed into a package and the package contains all the necessary foodstuff articles which, when combined, allow the item of food to be formed.

Typically the item of food is formed by the joining together of the articles prior to packaging the same.

In use the food preparer can select foodstuff articles from the package and selectively place the same together to form an item of food for selection and consumption.

In one embodiment the foodstuff articles are formed and shaped with a similar shape and size. Alternatively the foodstuff articles are the same shape but of different sizes.

In one embodiment the frozen confection is in the form of a disc and another foodstuff article is a bakery product and, in one embodiment the bakery product and frozen confection are circular in shape.

If, and as required, the package can include further foodstuffs in the form of liquid or granulated substances.

In a further aspect of the invention there is provided a kit for the preparation of an item of food for subsequent consumption, said kit including at least one article of a first foodstuff and at least one article of a second foodstuff, said articles provided within a common package and characterised in that when said package is opened at the location for consumption of the foodstuffs, selective articles of the first and second foodstuffs are removed and placed together to form the item of food with at least one of the articles of foodstuff being a frozen confection.

Typically the kit is stored in an environment at a temperature below freezing prior to opening.

In a further aspect of the invention there is provided a method of forming an item of food in a kitchen for a commercial restaurant, said method comprising the steps of selecting a package for a particular item of food to be served in the restaurant, characterised in that said package contains all of the articles of foodstuffs required to form the item, selectively removing the required articles from the package and placing the same together to form the item of food in accordance with predefined instructions with the item of food being a dessert containing at least one frozen confection article.

Preferably the method is repeated for successive items of food, each formed in accordance with the predefined instructions.

Thus the foodstuff articles are taken from a common package with each package containing sufficient foodstuff articles to allow a plurality of said items to be

Typically, a plurality of said foodstuffs are prepacked and placed into a package such that the package contains all the necessary foodstuffs which, when combined, allow the item of food to be formed. In one embodiment, the items of food are already formed and joined together but more preferably, the food preparer can selectively place the foodstuffs together to form an item of food for selection and/or consumption.

In one embodiment, the frozen confection is ice cream formed as a disc and the other foodstuff is a waffle or other bakery product. In this embodiment the ice cream discs and waffles in the package are circular in shape and can be of substantially similar depth or varying depths. It should be appreciated that the items of food can be of any required geometric shape to suit particular requirements and therefore need not be circular.

In one embodiment, the item of food formed consists of a disc of ice cream with a waffle positioned on each of the planar surfaces of the disc. Alternatively, there is provided a waffle with a disc of ice cream placed on each of the planer surfaces of the waffle.

In a further embodiment all the foodstuffs required for the formation of the item of food are provided in a single package. In one embodiment the foodstuffs comprise an ice cream disc, two waffles between which the ice cream disc is to be placed, and a sauce to be poured over. Thus all the items are present upon opening the package. In addition to adding to the convenience to the food preparer this allows improved portion and stock control thus providing useful economic savings to the food provider. Thus, the risk of running out of a particular item, say the ice cream disc, and not then being able to make the item of food using the other components is avoided and need not occur. Furthermore, when ordering supplies, only one order has to be placed for the whole item of food as the foodstuffs required are part of a single package and so when the order is placed the user can be sure that all the foodstuffs required will be delivered as a package.

In one embodiment the foodstuff articles in each package can be selectively positioned with respect to the other foodstuff articles in a number of ways thereby allowing the articles to be sued to form an item of food in a number of differing configurations to suit particular customer requirements and/or to provide variation while using the same foodstuff articles.

The item of food generated from the articles of foodstuff in the package can also be more visually appealing than is conventionally the case as the items have been shaped in a predefined manner to match and provide a predefined effect.

In one embodiment having removed the foodstuff articles from the package but prior to placing with other articles at least one of the articles is required to be treated in a particular way prior to placing together. For example, if the foodstuffs comprise ice cream, a cake portion and sauce, the cake portion and sauce can be heated prior to placing the heated cake portion in conjunction with the ice cream and then pouring the heated sauce over the same. Thus the serving of warm and cool items in combination is possible without particular skill or close timing by the food preparer being required.

Specific embodiments of the invention are now described with reference to the accompanying drawings wherein:-
Figure 1 illustrates a first arrangement of the item of food in accordance with the invention;
Figure 2 illustrates a second arrangement of the item of food in accordance with the invention; and
Figure 3 illustrates the formation of the foodstuff in a preferred embodiment of the invention;
Figure 4 illustrates a further embodiment of the invention in use.

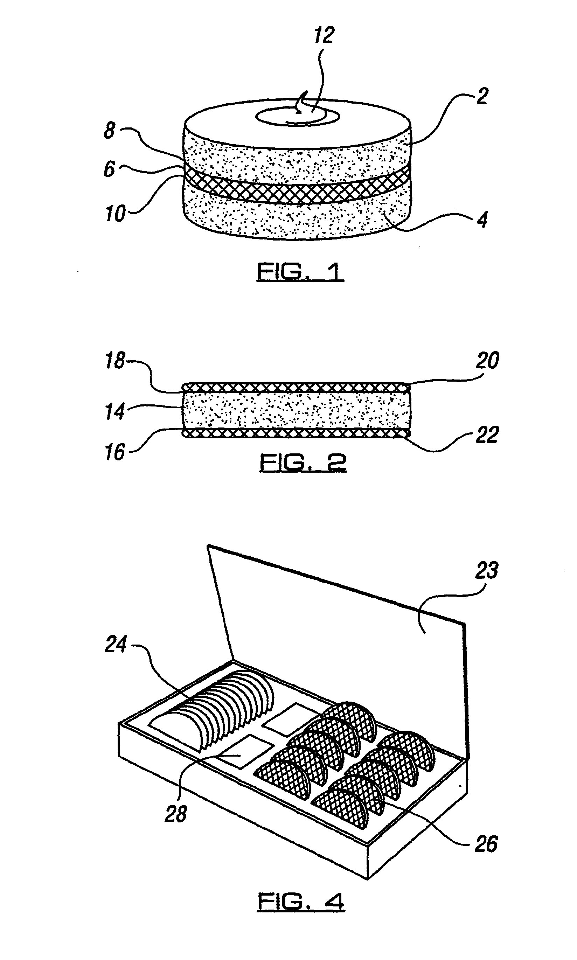

Referring firstly to Figure 1, there is illustrated a first embodiment of an item of food formed in accordance with the invention wherein said item of food comprises articles of two different foodstuffs in the form of two discs of ice cream, 2, 4 with a waffle 6 positioned therebetween. The discs of ice cream are placed on the planar surfaces 8 and 10 of the waffle. Although reference is made herein to the use of a waffle, it should be appreciated that others foodstuff articles could be used in place of the waffle as required, to form variations to the food item.

It is also illustrated in Figure 1 how further foodstuffs can be used such as, for example, a sauce 12 which can be poured over the item of food.

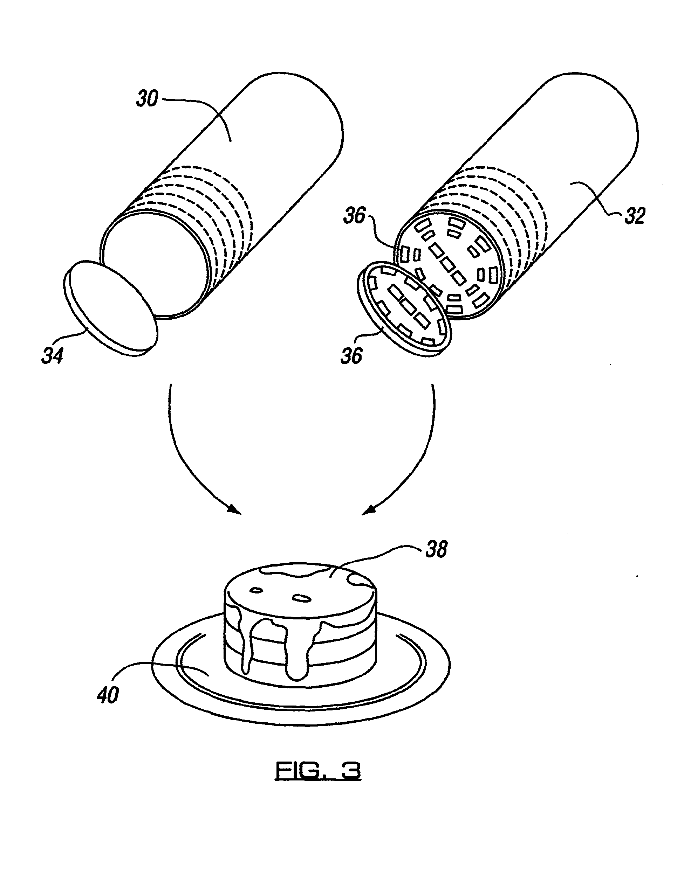

Figure 2 illustrates a second embodiment of an item of food in accordance with the invention wherein the item comprises a disc of ice cream 14 with planar surfaces 16 and 18 onto which, waffles 20, 22 are placed so as to form the item of food.

In Figure 3, one preferred embodiment of the invention is provided in a kit form with discs of ice cream provided in a flow wrap package 30 and the waffles in a flow wrap package 32. In one example of advantageous use the food preparer is a chef in a restaurant and the item of food, when assembled, is available for selection on the restaurant menu. If a customer selects the particular item, the chef removes a disc 34 of ice cream from package 30 and two waffles 36 from the package 32, assembles the same, in this embodiment as in Figure 2, and can then pour a sauce or other liquid 38 as required over the item of foodstuff. Thus the chef is able to quickly assemble a presentable and appealing item of foodstuff 40 from the kit components provided in the packages upon customer selection of that item and, importantly, in many restaurants, without the chef having to have particular skills in, for example, making desserts.

Figure 4 illustrates a further embodiment of the invention in the form of a retail pack 23 which can be provided for purchase and it will be seen how the retail pack comprises a series of formed and shaped portions of each of the required foodstuffs articles. The pack includes a series of discs 24 of ice cream and a series of waffles 26 and, in addition, sachets of sauce 28 which can also be used in conjunction with the foodstuffs if required. Thus, the consumer can remove the items as they require and place the same together to form the item of food for consumption. In addition, sachets of sauce 28 can be provided to be used in conjunction with the formed item of food as required by the consumer.

The present invention therefore provides a means for providing an item of food from a series of foodstuffs which can be created by a consumer at their own premises or more typically the foodstuffs required to form the item of food can be provided as a package and, upon opening, all the foodstuffs required are presented for assembly by a food preparer for subsequent provision in, for example, a restaurant. As the foodstuffs can be preshaped, are all provided together and the food preparer is therefore certain that all the required items are provided, the skill level required by the food preparer to assemble the foodstuffs to form the item of food is considerably reduced without adversely affecting the final appearance of the food item. This therefore presents an opportunity for staffing cost reductions and simplifies the ordering and stock control functions.

## Claims

1. A packaged food item, said item of food including at least two different foodstuff articles, at least one of the foodstuff articles being a frozen confection and **characterised in that** the foodstuff articles are shaped so as to be substantially linked geometrically and said foodstuff articles placed together in mutual relationship to form the item of food when the package is opened and the articles removed.

2. A packaged food item according to claim 1 **characterised in that** a plurality of said foodstuff articles are pre-packed and placed into a package and the package contains all the necessary foodstuff articles which, when combined, allow the item of food to be formed.

3. A packaged food item according to claim 1 **characterised in that** the item of food is formed by the joining together of the articles prior to packaging the same.

4. A packaged food item according to claim 1 **characterised in that** a food preparer selects foodstuff articles from the package and selectively places the same together to form an item of food for selection and consumption.

5. A packaged food item according to claim 1 **characterised in that** the foodstuff articles are formed and shaped with a similar shape and size.

6. A packaged food item according to claim 1 **characterised in that** the foodstuff articles are the same shape but of different sizes.

7. A packaged food item according to claim 1 wherein the frozen confection is in the form of a disc and another foodstuff article is a bakery product.

8. A packaged food item according to claim 7 **characterised in that** the bakery product and frozen confection are circular in shape.

9. A packaged food item according to claim 1 **characterised in that** the package includes further foodstuffs in the form of liquid or granulated substances.

10. A packaged food item according to claim 1 **characterised in that** having removed the foodstuff articles from the package but prior to placing with other articles at least one of the articles is required to be treated.

11. A packaged food item according to claim 10 **characterised in that** the treatment is the heating of said foodstuff articles.

12. A kit for the preparation of an item of food for subsequent consumption, said kit including at least one article of a first foodstuff and at least one article of a second foodstuff, said articles provided within a common package and **characterised in that** when said package is opened at the location for consumption of the foodstuffs, selective articles of the first and second foodstuffs are removed and placed together to form the item of food with at least one of the articles of foodstuff being a frozen confection.

13. A kit according to claim 12 **characterised in that** the kit is stored in an environment at a temperature below freezing prior to opening.

14. A method of forming an item of food in a kitchen for a commercial restaurant, said method comprising the steps of selecting a package for a particular item of food to be served in the restaurant, **characterised in that** said package contains all of the articles of foodstuffs required to form the item, selectively removing the required articles from the package and placing the same together to form the item of food in accordance with predefined instructions with the item of food being a dessert containing at least one frozen confection article.

15. A method according to claim 14 **characterised in that** the method is repeated for successive items of food, each formed in accordance with the predefined instructions.

16. A method according to claim 15 **characterised in that** the foodstuff articles are taken from a common package with each package containing sufficient foodstuff articles to allow a plurality of said items to be formed.
